# EUROPEAN PATENT APPLICATION

(11) **EP 4 538 656 A1**
(43) Date of publication of application: **16.04.2025**
(21) Application number: 24203484.1
(22) Date of filing: 30.09.2024
(51) Int. Cl.: G01F 22/00, G01F 23/80, G01F 23/22, G01F 23/296, G01F 1/66

(54) **MEASURING THE VOLUME OF LIQUID IN A CONTAINER**

(30) Priority: 11.10.2023 GB 202315576
(71) Applicant: Airbus Operations Limited, Bristol BS34 7PA (GB)
(72) Inventor: WOOD, Christopher, Bristol, BS34 7PA (GB)
(74) Representative: Abel & Imray LLP

(57) **Abstract**

The volume of a liquid (e.g. cryogenically stored liquid hydrogen) in a container (e.g. a fuel tank on an aircraft) is measured using acoustic sensors 118. The container comprises multiple chambers 112 each arranged to accommodate a volume of liquid. A computer processing unit 120 processes signals from acoustic sensors 118 that detect sound and/or vibration from each chamber 112 and provides an indication of the volume of liquid in the container. Such sounds and/or vibrations may arise inherently from the liquid contained therein.

## Description

### BACKGROUND OF THE INVENTION

The present disclosure relates to an apparatus and a method for measuring the volume of liquid in a container. More particularly, but not exclusively, this disclosure concerns a method of measuring the volume of liquid hydrogen in a fuel tank for an aircraft.

Embodiments of the invention relate to a fuel tank system for a hydrogen-powered aircraft. An aircraft powered by hydrogen has been proposed previously, one example being the aircraft proposed in the Airbus project "Cryoplane". Airbus are currently developing a hydrogen-powered commercial aircraft for introduction in the next decade or so via the "ZEROe" research and development project. Such an aircraft will typically require one or more fuel tanks for the storage of cryogenic liquid at very low temperatures and/or at very high pressures. Hydrogen can be stored as a liquid at atmospheric pressure at temperatures of -253° C or less. Higher temperatures are possible but require higher pressure to be maintained. Thus, storing cryogenic hydrogen in tanks places certain structural and material requirements on the tanks in order to maintain the high pressures and/or low temperatures necessary, thus requiring both structural strength of the fuel tank and insulation of the fuel tank.

When hydrogen is used as a fuel there needs to be a reliable way by which to measure the quantity of liquid hydrogen in the one or more fuel tanks. Traditional fuel tank gauge technology is largely unsuitable for measuring the quantity of liquid hydrogen in a container as a result of the extreme conditions under which the liquid hydrogen must be stored. Also, the storage of liquid hydrogen in a moving vehicle requires careful consideration of how the motion of the vehicle might impact on the storage of the hydrogen. To reduce unnecessary agitation of the liquid hydrogen in fuel tanks it may be preferable to divide a large fuel tank into smaller sections and/or add baffle plates within a fuel tank or part thereof, in order to reduce the movement of large amounts of liquid hydrogen from one part of the fuel tank to the other and back again as a result of motion of the vehicle. Such baffle plates may be introduced for the purpose of reducing the effects of "sloshing" of liquid within a tank. The introduction of baffles and/or other compartmentalization of a fuel tank adds further complications to the reliable measuring of the quantity of liquid within the fuel tank.

The present invention seeks to mitigate one or more of the above-mentioned problems. Alternatively or additionally, the present invention seeks to provide a solution to the need for a reliable measure of the volume of liquid in a container, that can for example be used to gauge fuel levels for a vehicle powered by liquified gas, that is stored in liquid form in a fuel tank in or on the vehicle.

### SUMMARY OF THE INVENTION

According to a first aspect of the invention, there is provided an apparatus for measuring the volume of liquid in a container. The container comprises multiple chambers each arranged to accommodate a volume of liquid. The chambers may be elongate. The chambers are preferably tubular in shape. There is a processing unit (e.g. a computer processing unit) and multiple sensors. At least one such sensor is arranged to detect noise (whether audible sound or vibration that is not audible to the human ear) from each chamber. The processing unit is configured to process signals from the multiple sensors to provide an indication of the volume of liquid in the container. Embodiments of the present invention may relate to measuring the volume of liquid in a container in the form of a fuel tank for containing a liquified gas (for example liquid hydrogen). It has been found that the use of sensors detecting noise/sound/vibration from each chamber of a liquified-gas fuel tank having many such chambers can provide a surprisingly accurate indication of the quantity of liquid in the fuel tank, despite the use of indirect measurements. It is particularly difficult to measure the volume of liquid hydrogen in an individual chamber with sensors required to be *in situ* in the hydrogen (as a result of the temperature-pressure conditions present and the requirements they place on the sensing equipment). It may also be difficult to measure the position of the boundary between gas and liquid in such an environment with conventional sensing techniques. Such techniques (using optical sensors) may not be particularly accurate in conditions where the boundary layer between gas and liquid is not well defined, is difficult to detect accurately, and/or is moving during use. Using indirect, for example acoustic, measurements therefore provides an effective solution for measuring the volume of liquid hydrogen within such a structure and is therefore seen as a promising solution for such embodiments of the invention, for example on a hydrogen-powered aircraft.

It may be that each chamber is defined at least in part by an internal wall (i.e. internal to the container) that separates it from adjacent chambers. The container may include structural dividers that divide the container into multiple chambers. In such a case, it may be that the wall of one chamber also forms the wall of another chamber. It may be that each chamber has its own walls that are not shared with any other chamber. Each chamber may be in the form of a tube. One chamber may be in fluid communication with another chamber, for example via one or more holes in a wall that otherwise divides the chambers from each other. The chambers may be differently shaped and/or differently sized. Some may for example have a capacity that is less than 90%, optionally less than 80% and possibly less than 70% of a different chamber of the container.

Each chamber may include internal structure to limit the movement of liquid within the chamber (for example to reduce sloshing), for example by allowing slow flow of liquid from one part of the chamber to another part of the chamber, whilst limiting the rapid movement of large volumes of liquid from one part of the chamber to another, for example when half full. Each chamber may include one or more plates, for example, baffle plates. The baffle plates may allow the slow flow of liquid from one side of the plate to the other. This may be achieved by the plates having holes or formations that allow such flow, or may be as a result of the plate not extending across the full height and/or width of the chamber. It will be appreciated that the presence of internal structure that divides a chamber into difference regions such that the flow of liquid between regions is changed / slowed in some way may have an impact on the accuracy of fuel gauges that rely on measuring a depth of liquid at a given location in the chamber. It has been found that embodiments of the invention utilising noise-detecting sensors for measuring the volume of liquid in a container can operate reliably despite the presence of such baffle plates, thus providing a useful alternative to a liquid gauging apparatus that relies on depth measurement at a single location within a container.

As mentioned above, the chambers may be elongate, for example extending along an axis. The axis may be substantially horizontal when the container is in use. Each chamber may be at least 5 times longer, possibly at least 10 times longer, than the square root of its cross-sectional area (i.e. taken about a section having a normal axis that is parallel to the axis along which the chamber extends).

There may be ten or more chambers, for example 25 or more. In the case where the container has many individual chambers, it may be the case that the majority of chambers are either completely full or completely empty, which may be relatively easy to determine from the signals from the (e.g. acoustic) sensors. As a result the accurate measurement of the total quantity of liquid within the container may depend on how many chambers are partially full and how accurately the quantity of liquid in such partially full chambers can be determined. It is believed that the more chambers and the more sensors that are provided, the more accurate the measurement of the total quantity of liquid in the chambers of the container will be. It may be that the processing unit and/or sensors are configured to provide an indication of the volume of liquid in a given chamber in the form of one of a discrete number of different states (e.g. one of three states being empty, half-full, and full), and preferably distinguishing between ten states or fewer. It may for example be the case that the processing unit is configured to deem an individual chamber as completely full, as completely empty, or as one of a set number of intermediate states (the set number being at least one, but no more than five intermediate states, and optionally no more than three intermediate states). In related embodiments, despite there being a relatively crude measurement of the intermediate quantities of fuel per chamber on a chamber-by-chamber basis, the overall measurement of fuel can nevertheless be sufficiently accurate, particularly when it is known that only a small minority of chambers will be different from completely empty and completely full, and that the measurements of completely full and completely empty chambers will be accurate.

It may be that each chamber is associated with at least two sensors, for example, one sensor provided for detecting the noise/sound at each end of the chamber.

Each of the multiple sensors may be in the form of a respective microphone (or other acoustic sensing device such as a hydrophone, although it is preferred for the sensor not to be in direct contact with the liquid in the chamber).It may be that the noise/sound to be detected by the sensors is outside the audible range of human hearing. It may be that the sensors detect noise in the form of vibrations. In some embodiments at least some of the multiple sensors may be in the form of a vibration sensor (i.e. not necessarily in the form of a conventional microphone). The sensors may include optical sensing elements. The sensors may include electrical sensors.

It may be that each sensor is positioned at an end of the chamber with which it is associated. It may be that each sensor is positioned to be remote from the interior of the chamber with which it is associated, which may for example be at one end or the other of the chamber or at a different location, for example remotely from the chamber.

In the case where a sensor is positioned remotely from the interior of the chamber, sound from within the chamber may be arranged to travel to the sensor via a waveguide. It may for example be the case that a sensor is connected to the chamber or its immediate surroundings via a waveguide for carrying acoustic signals from the chamber to the sensor. It may be the case that each chamber acts as a waveguide, such that acoustic energy from within the chamber is guided to the sensor by the waveguide formed by the chamber.

The sound or noise or vibrations detected by the sensors may originate from sounds or noise or vibrations that are inherently present (not being generated specifically for the purpose of detection by the sensors in order to measure the volume of liquid in the container). Sound or noise or vibrations inherently present in the system may for example arise from the sounds or vibrations generated in any case by the environment external of the container (for example, engine vibration when an engine is present) or by movement or changes in the liquid/gas system within each chamber of the container.

According to a second aspect of the invention, there is provided a method of measuring the volume of liquid in a container. The container may for example be a container in accordance with the first aspect of the invention as described or claimed herein. The container comprises multiple chambers for holding liquid. The method includes a step of converting noise from each chamber into an electronic signal. The method includes a step of processing the electronic signals to provide an indication of the volume of liquid in the container. The method is preferably performed during an operation where liquid is removed from the container for example when the liquid (for example fuel) is gradually withdrawn from the container and used by the platform (for example, vehicle) during its operation.

The step of processing the electronic signals to provide an indication of the volume of liquid in the container includes using signals that primarily depend on the noise caused by sounds and/or vibrations that arise inherently from the container and/or its contents. For example the noise may include noise caused by phase change at the boundary layer between a liquid phase and a gas phase (e.g. fizzing noises). The noise may include noise caused by the movement of the liquid within the container (e.g. splashing and/or sloshing). The noise may include noise caused by vibrations of the walls of the chamber and/or of the container, which may be caused by vibrations of the structure around the container. The amount of liquid in the chamber / container will affect how such vibrations sound. For example, the noise would be moderated by the presence of liquid in the tube.

The method of the invention has particular application in embodiments wherein the liquid in the container is liquid hydrogen, and the container is a fuel tank of a vehicle, for example an aircraft. The container may include a layer of insulation. The container may have an insulating layer comprising a vacuum region.

In accordance with a third aspect of the invention there is provided a method of measuring the volume of liquid hydrogen in a fuel tank by measuring, with a plurality of sensors, the sounds and/or vibrations that arise inherently from the fuel tank and/or the hydrogen contained therein, and using such measurements to calculate an estimate of the quantity of liquid hydrogen in the fuel tank.

In the method according to the second and/or third aspect of the invention, it may be that other parameters are measured and used to assist in calculating the quantity of liquid in the container. Such other parameters may assist in improving the accuracy of the measurement of the volume of liquid in the container. It may be that two or more, for example three or more such extra parameters are used in the method. The method may include using a parameter relating to a measure of temperature. The method may include using a parameter relating to ambient temperature. The method may include using a parameter relating to a temperature within the container. The method may include using a parameter relating to a temperature outside the container. The method may include using a parameter relating to a measure of pressure. The method may include using a parameter relating to ambient pressure. The method may include using a parameter relating to a pressure within the container. The method may include using a parameter relating to a pressure outside the container. The method may include using a parameter relating to the orientation of the container. For example the noise made by the liquid within a chamber when the axis of the tube is horizontal may be different from the noise made when the tube is inclined to the horizontal, so that for example the orientation and shape of the liquid and the gas constituents in the tube are different. In the context of use of the method in relation to a fuel tank for an aircraft, the method may include using parameters relating to the roll and/or pitch of the aircraft, for example. The method may include using a parameter relating to the acceleration of the container (for example the magnitude of the acceleration, the direction of the acceleration and/or the rate of change of the acceleration and/or previous values of the acceleration). The method may include using a parameter relating to ambient noise, which may for example be ambient noise detected by a separate sensor and/or microphone and/or may be a measure of expected ambient noise (not being directly measured at the time of measuring the volume of liquid in the container). The method may include using a parameter relating to vibrations outside the container.

There may, alongside and/or in addition to calculating the quantity of liquid in the container, be a step of calculating an error margin, for example indicating a likely tolerance and/or accuracy of the calculated quantity of liquid. Such an error margin may be calculated with the use of multiple estimates of the volume of separate parts of the container (e.g. separate chambers) each having its own error margin. It may be that the error margin is calculated on the basis, at least in part, of how many chambers are deemed completely full, how many chambers are deemed completely empty and how many chambers are deemed partially full.

The quantity of liquid in the container may be calculated with the use of a computer model, for example a machine learning model, for example a model generated by machine learning. Such a model may for example enable a computer processing unit to relate (e.g. map or otherwise correlate) an acoustic signature from the container, or part thereof (e.g. as measured by acoustic sensors) onto an estimate of a volume of liquid. This may be done with the use of other parameters. For example, it may be that with the use of the computer model an estimate of the volume of liquid can be determined from an acoustic signature (and/or acoustic characteristics / features of the signals) from (of) the container, or part thereof, optionally with the use of other parameters. The way in which the signature of the multiple parameters (including parameters from the signals detected by the acoustic sensors) can be converted into an estimated measure of the volume of liquid can be achieved with an algorithm or process that is pre-determined by a machine learning process using test data. It may also optionally be that in-flight data can be used to calibrate the algorithm, for example by providing a known acoustic response of a full chamber, for example a chamber which is known to be full at a point in the flight at which the measurement is taken.

The computer model may be embodied by a computer program product.

The present invention thus further provides a computer program product comprising instructions which, when the program is executed by a computer, cause the computer to perform the function of the above-mentioned processing unit of the invention and/or cause the computer to calculate an estimate of a quantity /volume of a liquid according to the method of the invention. The computer program product may be provided on a computer processing unit, as part of its programming.

Embodiments of the present invention have particular application when used in relation to a vehicle having a fuel tank. Such embodiments may therefore have a fuel gauge which is arranged to display an indication of the quantity of fuel on the basis of the measurement of the volume of fuel calculated by the use of the present invention. The fuel gauge may be arranged to provide an indication of the quantity of fuel and also an indication of the confidence and/or accuracy (or likely accuracy) of that indication. Thus the present invention provides according to a fourth aspect, a vehicle including a fuel tank and a fuel gauge apparatus utilising any or all of the first to third aspects of the invention.

Embodiments of the present invention have particular application when used in relation to an aircraft to be powered, at least in part, by hydrogen fuel carried in liquid form in one or more fuel tanks of the aircraft. The aircraft may be in the form of a hybrid-hydrogen aircraft, for example using electric power and hydrogen power. The electric power may be generated, at least in part by using hydrogen as a fuel. The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and more preferably more than 50 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more. The aircraft may include engines that are powered by hydrogen combustion through modified gas turbine engines. In such an engine, liquid hydrogen is used as fuel for combustion with oxygen. Alternatively, or additionally, the aircraft may comprise one or more hydrogen fuel cells for creating electrical power. Such electrical power may be used to complement a gas turbine engine, whether powered by hydrogen or other fuel on the aircraft. The aircraft may comprise one or more turbofan engines to provide thrust, for example at least partly powered directly by combustion of hydrogen and/or powered electrically by electric power generated from hydrogen. The aircraft may comprise one or more turboprop engines to provide thrust, for example at least partly powered directly by combustion of hydrogen and/or powered electrically by electric power generated from hydrogen. The aircraft may feature a blended wing body, which has the advantage of a wider interior for hydrogen storage and distribution purposes. The tank(s) for storing liquid hydrogen may be located underneath the wings and/or in the wings. The tank(s) for storing liquid hydrogen may be located behind a rear pressure bulkhead.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
Figure 1 shows a front view of an aircraft according to a first embodiment of the invention;
Figure 2 shows a section of a liquid hydrogen fuel tank of the aircraft of the first embodiment;
Figure 3 shows schematically chambers of the fuel tank of Figure 2 together with acoustic sensors and a processing unit;
Figure 4 shows an alternative arrangement of acoustic sensors and chambers of a fuel tank in accordance with a second embodiment;
Figure 5 shows a flow diagram illustrating a method according to a third embodiment of the invention; and
Figure 6 shows a flow diagram illustrating a machine learning training phase for aspects used in the method of Figure 5.

### DETAILED DESCRIPTION

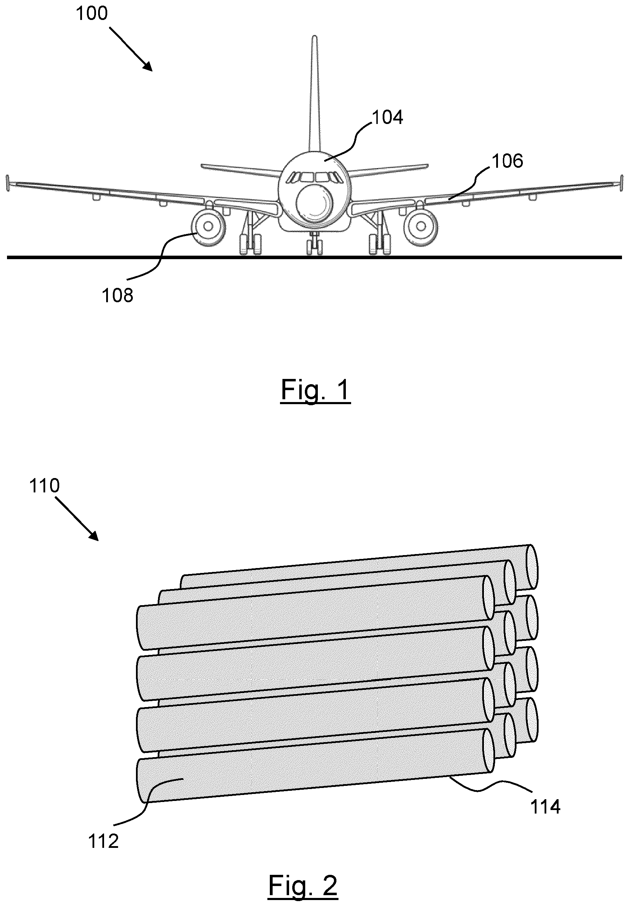

Embodiments of the present invention relate to a fuel gauge for measuring the volume of liquid H₂ in a fuel tank for a hydrogen-powered aircraft. Such an aircraft 100 is shown in Figure 1 and includes a fuselage 104, wings 106, and engines 108 arranged on the undersides of the wings 106. The fuel supplying the engines is stored in a tank system the location of which is not shown in Figure 1, but which could be in the wings 106 and/or in the fuselage 104 for example.

A section of the fuel tank 110 is shown in Figure 2, which shows multiple tube-like fuel chambers 112 each arranged to store liquid hydrogen under pressure. Thus the fuel tank 110 is defined by an internal structure of dividing walls 114, that divide the tank 110 into multiple chambers 112. Each tube-like chamber 112 has a wall thickness sufficiently large that the chamber can safely contain liquid hydrogen under pressure. The void defined by each chamber is tubular in shape, having a circular cross-section. The tank may optionally include the integration of stiffening elements between and/or in the walls of the tube-like chambers. Thermally insulating material (not shown) is provided to enclose the fuel tank.

It may be that one or more chambers are in fluid communication with one or more other chambers of the tank 110. There may for example be small holes or passageways (not shown) linking adjacent chambers, for example to allow for gas to escape from chambers and to collect in a higher chamber, as the gas rises.

The structure and/or arrangement of the tubular fuel chambers 112 in the aircraft may be in accordance with the disclosure of US 2015/0336680, the contents of which are incorporated herein by reference thereto.

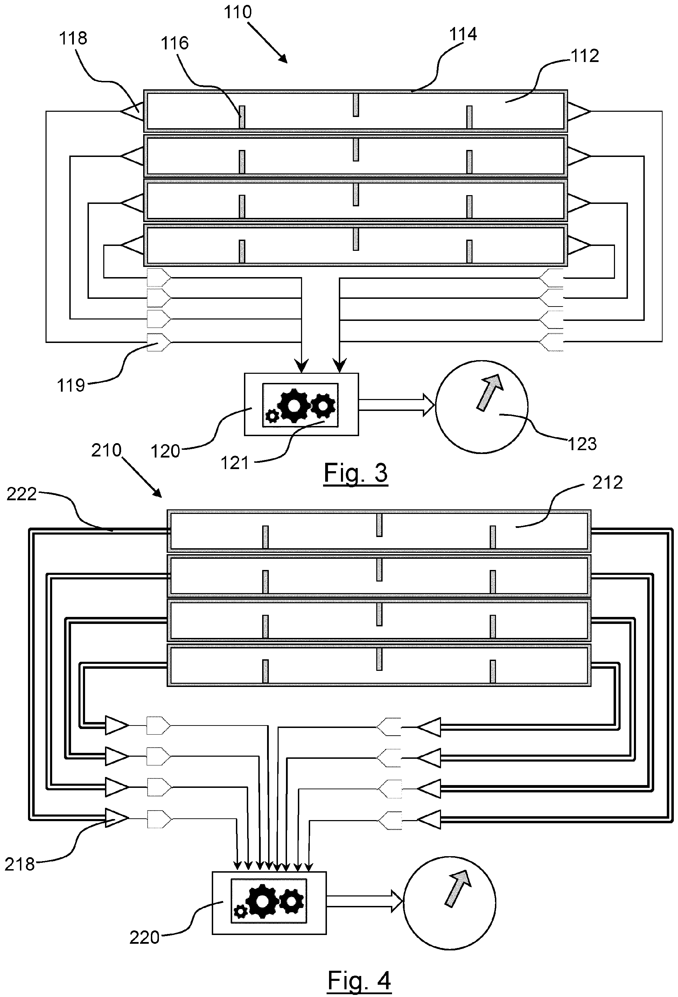

Figure 3 shows schematically the chambers 112 of the fuel tank 110 each being connected to two acoustic sensors 118, one at each end of the tubular chamber. Each chamber is provided with internal baffle plates 116 to reduce unwanted motion, or "sloshing", of the liquid hydrogen within the chamber. Given that the chamber is tube-like it acts as an acoustic waveguide, such that the acoustic energy within the chamber is guided along the chamber, and can then be detected by an acoustic sensor 118 at the end of the chamber. In Figure 3, four chambers are visible, but in practice there would be many more such chambers, typically more than ten and possibly more than fifty such chambers per aircraft 100. Each acoustic sensor 118 is in the form of a microphone that detects sound in a frequency range that covers at least 500Hz to 20kHz (i.e. mid-range upwards). It may be that the frequency response of the microphones used will need to be tuned/adjusted according to the particular application, and may depend on such things as the frequency of sounds inherent in the system, and the dimensions of the chambers. Each sensor passes a digital output (possibly an analog output via an analog-to-digital convertor 119) to a processing unit 120. The digital output represents the sound signals sensed by the sensor. In this embodiment, the sounds sensed are the sounds that are inherently present within the chamber (internal sounds) that for example originate from the liquid hydrogen moving with the tank (for example as the liquid hydrogen splashes against the chamber walls 114 or against itself, creating "sloshing" or "splashing" noises) and/or from the noises made as gaseous hydrogen is released from the hydrogen (and/or other noises resulting from a phase change at the boundary layer of the gas and liquid) and/or from other vibrations/noises that are inherently created externally of the tank (external sounds) but which can also be sensed as sound by acoustic sensors in the tank. In other embodiments, a source sound signal may be emitted to cause a sound within the tank that can be detected. In all such cases, the quantity of liquid hydrogen in the tank versus the quantity of gaseous hydrogen in the tank will affect the sound detected by the acoustic sensors. For example, the noise made by a completely full (or substantially full) chamber will be different from a half full chamber, which will be different from an empty chamber. The frequency profile of sound from the tube may depend on how full or empty the tube is, for example. There will be less noise from sloshing in a completely empty (or a completely full) tube, but an empty tube may affect external sound/vibrations differently from a full tube. Sloshing noises may be much louder in a partially full chamber, or the partially full chamber may have a more varying signature than the full or empty chambers. An empty chamber may also have a unique sound signature due to external vibrations causing sound and/or vibrations withing the chamber.

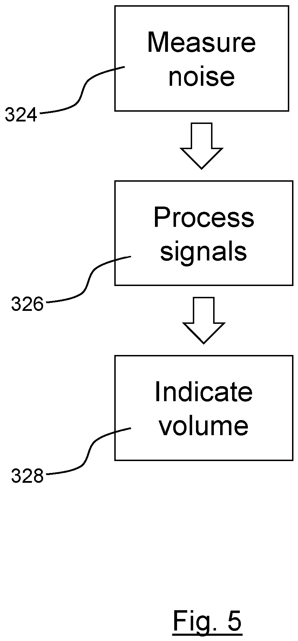

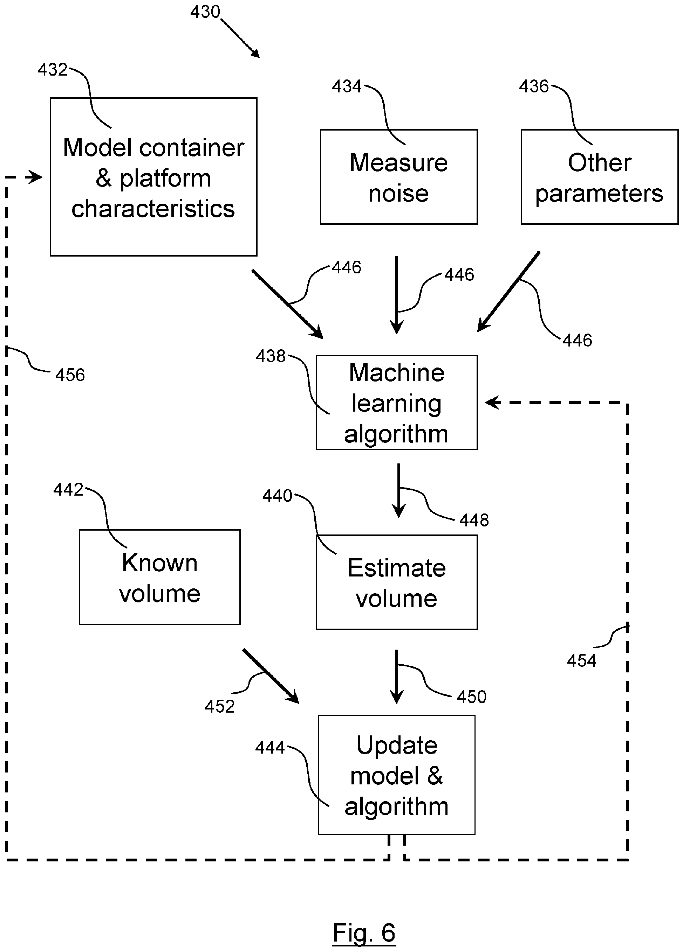

The processing unit 120 analyses the sound signal from each end of each chamber 112 and, utilising the processing unit's computer program product 121, allocates a value of how full the chamber is and an indication of confidence (which may be in the form of a percentage value indicating confidence - 100% being no error possible, whereas 0% being no confidence at all in the value given) or a likely error margin. With such information about each such chamber, the overall quantity of liquid hydrogen in the tank 110 (all such chambers) can be calculated with an overall indication of confidence. The information may be presented as a fuel level with an indication of confidence given in percentage form (or one of a finite number of possible levels of confidence, e.g. one of "high", "medium" and "low"), but in this embodiment is presented as an absolute error margin, which is expressed as +/- 2 x SD, where SD is a calculated standard deviation, that is derived from combining individual estimated standard deviations that express the likely error in the individual fuel level estimate value of each respective chamber. The calculated volume of fuel, and/or optionally the confidence level, can then be relayed to a display gauge 123 which displays an indication of the fuel quantity remaining, and/or optionally the confidence level, based on the measurements made by the present invention. An algorithm and/or a fuel tank model developed via machine learning may be used by the processing unit 120 in calculating the total volume of fuel. Such an option is described in further detail below with reference to the third embodiment illustrated by Figures 5 and 6.

Figure 4 shows an alternative arrangement of the sensors 218 in relation to the fuel chambers 212, in accordance with a second embodiment. The main differences between the second embodiment and first embodiment will now be described. Instead of the acoustic sensors 218 being placed at the ends of the fuel chambers 212, an acoustic waveguide 222 transports the sound from the end of each tubular chamber 212 to acoustic sensors 218 that are positioned remotely from the fuel tank 210, and optionally closer to the signal processing unit 220. In all other respects the second embodiment operates in a manner similar to the first embodiment.

Figure 5 shows a flow diagram illustrating a method according to a third embodiment of the invention, which could utilise the apparatus of the first embodiment, the second embodiment or a different apparatus. The method is performed in respect of a container for holding a liquid, the container comprising many chambers (for example, at least 25), which each contain a portion of the liquid in the container. The volume of liquid held by the container is equal to the sum of the volumes of liquid held by the chambers. The method is performed for the purpose of measuring the volume of liquid in the container. The method includes a step of converting noise detected at each chamber into an electrical signal 324. A further step is conducted in which the signals representative of the noise from each chamber are processed 326 to provide an estimate 328 of the volume of the liquid in the container. This is done by an algorithm which estimates for each chamber of the container the volume of liquid within that chamber. The arrangement of the container and its use in normal operation may be such that the majority of chambers in the container will either be completely full or completely empty, with only a small number of chambers being partially full. It is reasonably straightforward to determine from the noise generated by a chamber as to whether it is completely full, completely empty, or only partially full because this only requires the algorithm to distinguish between three possible states. If there are for example 25 chambers in total with a likelihood of only five or fewer chambers being in the partially filled state and if it is possible to detect with confidence whether a chamber is in one of the three states then the accuracy of measuring the quantity of liquid in the 25 chambers will be better than +/- 10%. For example, if the algorithm deems five chambers definitely empty and fifteen chambers definitely full, with five chambers being deemed partially full, then it can be determined that the percentage of the total volume of the container filled with liquid must be 70% plus/minus 10%.

The algorithm used to process these signals to indicate the volume of liquid in the container can alternatively be more accurate, so that the quantity of liquid in a partially full chamber can be more accurately determined. That in turn may produce a more accurate measurement of the total quantity of liquid in the container. A suitable way of providing a more accurate algorithm is to use a machine learning system to generate an optimised model of the container and an optimised algorithm for converting the data received into an accurate indication of the total volume of liquid. Figure 6 shows such a method utilising such a machine learning system 430.

The aim of the machine learning system 430 is to output a model 432 that characterises both the container and the characteristics of the environment in which the container is used in practice. For example, the container may be a liquid hydrogen fuel tank for use on an aircraft which in use will undergo certain vibrations, temperature variations, pressure variations, changes in orientation and acceleration/movement during operation. All of these external characteristics have an effect on the sound detected by the acoustic sensors and in order for a more accurate model and algorithm to be generated, need to be taken into account. Of course, if additional parameters are used in generating the model and algorithm during the learning phase, it is desirable to have additional data representative of those additional parameters input during use of the system. It may be as a first step that a set of candidate variables are identified from the available data for use in the machine learning algorithm 438. In terms of the sound made by liquid within a chamber of the container and how that relates to how full the chamber is, a first suitable candidate variable is extracting measures from the sound that arise from bulk movement of the liquid in the container generating noise as portions of the liquid make contact with other portions of the liquid or the interior surface of the container ("sloshing noises"). Such sloshing noises will change according to how full the chamber is with liquid. A second suitable candidate variable is extracting a measure of noise that arises from changes of phase at the boundary layer between the liquid and gas in the chamber, typically as a result of gas coming out of the liquid ("fizzing noises"). Such fizzing noises will depend on various factors including how much agitation of liquid is occurring and changes in the temperature and pressure within the chamber. Also, the frequency profile of the fizzing noise may change as liquid levels in the chamber change. A third suitable candidate variable is extracting a measure of noise (or vibration) from that which is inherently generated by the platform (in this case, the aircraft), and detected by an acoustic sensor (or vibration sensor), after having passed via the liquid within a chamber. Such inherent noise or vibration from the platform may have a relatively well understood and/or consistent frequency signature, which when passing via the container and the liquid/gas within an individual chamber changes in a manner that depends on the relative volumes of liquid/gas in the chamber. These three candidate variables constitute the measured 'noise' 434 of the chamber.

Other candidate variables 436 include measures such as ambient pressure, ambient temperature, pressure and temperature measurements from individual chambers of the container, orientation of the platform (e.g. of the aircraft, and therefore possibly including a measure of aircraft pitch, aircraft roll, acceleration, and the like), measures or predictions of ambient noise from outside of the container during use, and vibrations from outside of the container during use.

The model of the container 432 will include not only factors such as the number and geometry of chambers, their internal volume, and how the container fills and empties in normal use, but also may include variables such as the location of the acoustic sensors relative to the chambers, the material and dimensions of the structure that defines the chambers, and the overall structure of the container. The model 432 may also include details that depend on the platform in which the container is to be used, which may include expected vibrations and noises generated during standard use of the platform and the like. In certain embodiments it may be that a separate model of the container is not provided but is instead included as part of the machine learning algorithm 438 and the selection of variables to be taken into account when training the machine learning algorithm 438.

During a learning phase, the machine learning algorithm 438 receives the noise (indicated by arrows 446) measured by the acoustic sensors, all other parameters 436 (e.g. not being noise measurements), and with use of the model of the container 432 and the existing algorithm generates (indicated by arrow 448) a measure 440 of the volume of liquid within the container. Comparing (indicated by arrows 450 and 452) this machine generated measure of the volume 440 with a known volume 442 enables the model of the container 432 and/or the machine learning algorithm 438 to be updated and improved 444, with the updated information relayed back into the model such that the process is repeated with the updated information (indicated by arrows 454 and 456). Such a process is performed many times over with test data so that the algorithm 438 and model 432 can be optimised, in accordance with standard machine learning techniques. After sufficient training data has been used to optimise the model 432 and algorithm 438 , the model 432 and algorithm 438 may then be deployed in a computer processing unit as part of the software to be used when converting noise measurements 434, and any other necessary parameters 436, into a measure of the volume of liquid within the container 440 - for example, as shown in the method of Figure 5.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The acoustic sensors used could have a different frequency response.

The 3-D shape of the tank may be shaped to fit in a part of the aircraft such as the wings, or a part of the fuselage, and may therefore have a complicated shape that means that some chambers are of a different length from others. In some embodiments, the chambers could have a generally tubular shape but having a cross-section in the form of a square, rectangle, hexagon or the like. Some chambers may be of a different size from other chambers. For example, the arrangement may be such that the lowest 25 chambers in a fuel tank may each hold about 1% of the total fuel capacity of the tank with the remaining 25 chambers (being positioned higher) each holding about 3% of the total fuel capacity. Such an arrangement may be beneficial in a case where the accuracy of the fuel gauging is limited by discerning which fuel tanks are empty and which are full, and the accuracy of a measurement is more important when the tank is close to empty. Thus, this might enable the system to gauge how full a tank is when % full or less to an accuracy of +/- 0.5%. This could be compared to a case where there are 50 tubes of the same capacity, thus allowing measurements with an accuracy of +/- 1% at any given level of fullness.

There may be only one acoustic sensor per chamber. It may in some embodiments be possible to have fewer acoustic sensors than chambers, if say the way in which the chambers are emptied during operation is well understood and such that greater accuracy of fuel levels is required when the tank is closer to being empty (and/or closer to being full), than another level (say closer to being half-full).

Each sensor could be in the form of an optical sensor that outputs an optical signal, depending on vibration / sound detected, for processing by a suitable processing unit.

Each sensor could be integrated as a part of the end (e.g. an end cap) of a chamber. The sensor or a part thereof may form a part of the structure of the chamber and/or a wall forming a part of the chamber.

The volume of other liquid fuels, liquified gases, or cryogenic liquids could be measured using similar techniques to the above. The embodiments may have application on vehicles other than aircraft, and may have non-vehicle related applications.

The following clauses set out various combinations of subject matter which are considered to be within the scope of the present patent application:
Clause 1. Apparatus for measuring the volume of liquid in a container, wherein
   the container comprises multiple chambers each arranged to accommodate a volume of liquid, and
   the apparatus comprises a processing unit and multiple sensors such that at least one sensor is arranged to detect noise from each chamber,
   the processing unit being configured to process signals from the multiple sensors to provide an indication of the volume of liquid in the container.
Clause 2. Apparatus according to clause 1, wherein the container is a fuel tank for containing liquified gas.
Clause 3. Apparatus according to clause 1 or 2, wherein each chamber is in the form of a tube.
Clause 4. Apparatus according to any preceding clause, wherein there are ten or more chambers.
Clause 5. Apparatus according to any preceding clause, wherein each chamber is associated with at least two sensors.
Clause 6. Apparatus according to any preceding clause, wherein each of the multiple sensors is in the form of a respective microphone.
Clause 7. Apparatus according to any preceding clause, wherein each sensor is positioned at an end of the chamber with which it is associated and/or remote from the interior of the chamber with which it is associated.
Clause 8. Apparatus according to any preceding clause, wherein each chamber acts as a waveguide, such that acoustic energy from within the chamber is guided to the sensor along the waveguide formed by the chamber.
Clause 9. Apparatus according to any preceding clause, wherein each sensor is positioned remotely from the interior of the chamber with which it is associated and the sound from within the chamber which is detected by the sensor travels to the sensor via a waveguide.
Clause 10. Apparatus according to any preceding clause, wherein the sensors are arranged to detect sounds and/or vibrations that arise inherently from the fuel tank and/or the liquid or gas contained therein.
Clause 11. A method of measuring the volume of liquid in a container, the container comprising multiple chambers, the method including the following steps:
   converting noise from each chamber into an electronic signal, and
   processing the electronic signals to provide an indication of the volume of liquid in the container.
Clause 12. A method according to clause 11, wherein the step of processing the electronic signals to provide an indication of the volume of liquid in the container includes using signals that are generated by sensing sounds and/or vibrations that arise inherently from the container and/or its contents.
Clause 13. A method according to clause 12, wherein the sounds and/or vibrations that arise inherently from the container and/or its contents include one or more of the following:
   - noise caused by phase change at the boundary layer between a liquid phase and a gas phase,
   - noise caused by the movement of the liquid within the container, and
   - noise caused by vibrations of the walls of the chamber and/or of the container.
Clause 14. A method according to any of clauses 11 to 13, wherein
   the liquid in the container is liquid hydrogen, and
   the container is a fuel tank of a vehicle.
Clause 15. A method of measuring the volume of liquid hydrogen in a fuel tank by measuring, with a plurality of sensors, the sounds and/or vibrations that arise inherently from the fuel tank and/or the hydrogen contained therein, and using such measurements to calculate an estimate of the quantity of liquid hydrogen in the fuel tank.
Clause 16. A method according to any of clauses 11 to 15, wherein other parameters are measured and used to assist in calculating the quantity of liquid in the container, said other parameters including two or more of:
   - ambient temperature,
   - a temperature within the container,
   - a temperature outside the container,
   - ambient pressure,
   - a pressure within the container,
   - a pressure outside the container,
   - orientation of the container,
   - acceleration of the container,
   - ambient noise, and
   - vibration outside the container.
Clause 17. A method according to any of clauses 11 to 16, wherein the method includes calculating the quantity of liquid in the container and calculating an error margin with the use of multiple estimates of the volume of separate parts of the container each having its own error margin.
Clause 18. A method according to any of clauses 11 to 17, wherein the method includes calculating the quantity of liquid in the container with the use of a computer model that relates an acoustic signature from the container, or part thereof, onto an estimate of a volume of liquid, optionally with the use of other parameters.
Clause 19. A vehicle including a fuel tank and a fuel gauge apparatus for providing an indication of the volume of fuel in the fuel tank, wherein the fuel gauge apparatus includes apparatus according to any of clauses 1 to 10 and/or wherein the fuel gauge apparatus operates with the use of a method according to any of clauses 11 to 18.
Clause 20. A vehicle according to clause 19, being an aircraft, and wherein the fuel tank is a liquid hydrogen fuel tank.
Clause 21. A computer program product comprising instructions which, when the program is executed by a computer, cause the computer to perform the function of the processing unit of any of clauses 1 to 10 and/or cause the computer to calculate an estimate of a quantity/volume of a liquid according to the method of any of clauses 11 to 18.
Clause 22. A computer processing unit programmed with the computer program product of clause 21.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. Apparatus for measuring the volume of liquid in a container, the container for example being a fuel tank for containing liquified gas, wherein
the container comprises multiple chambers each arranged to accommodate a volume of liquid, and
the apparatus comprises a processing unit and multiple sensors such that at least one sensor is arranged to detect noise from each chamber, for example each chamber being associated with at least two sensors,
the processing unit being configured to process signals from the multiple sensors to provide an indication of the volume of liquid in the container.

2. Apparatus according to claim 1, wherein each chamber is in the form of a tube.

3. Apparatus according to claim 1 or 2, wherein there are ten or more chambers.

4. Apparatus according to any preceding claim, wherein each of the multiple sensors is in the form of a respective microphone.

5. Apparatus according to any preceding claim, wherein each sensor is positioned at an end of the chamber with which it is associated and/or remote from the interior of the chamber with which it is associated.

6. Apparatus according to any preceding claim, wherein each chamber acts as a waveguide, such that acoustic energy from within the chamber is guided to the sensor along the waveguide formed by the chamber, and optionally wherein each sensor is positioned remotely from the interior of the chamber with which it is associated and the sound from within the chamber which is detected by the sensor travels to the sensor via a further waveguide.

7. Apparatus according to any preceding claim, wherein the sensors are arranged to detect sounds and/or vibrations that arise inherently from the fuel tank and/or the liquid or gas contained therein.

8. A method of measuring the volume of liquid in a container, for example a method of measuring the volume of liquid hydrogen in a fuel tank of a vehicle, the container comprising multiple chambers, the method including the following steps:
converting noise from each chamber into an electronic signal, and
processing the electronic signals to provide an indication of the volume of liquid in the container.

9. A method according to claim 8, wherein the step of processing the electronic signals to provide an indication of the volume of liquid in the container includes using signals that are generated by sensing sounds and/or vibrations that arise inherently from the container and/or its contents, wherein the sounds and/or vibrations that arise inherently from the container and/or its contents include one or more of the following:
• noise caused by phase change at the boundary layer between a liquid phase and a gas phase,
• noise caused by the movement of the liquid within the container, and
• noise caused by vibrations of the walls of the chamber and/or of the container.

10. A method of measuring the volume of liquid hydrogen in a fuel tank by measuring, with a plurality of sensors, the sounds and/or vibrations that arise inherently from the fuel tank and/or the hydrogen contained therein, and using such measurements to calculate an estimate of the quantity of liquid hydrogen in the fuel tank.

11. A method according to any of claims 8 to 10, wherein other parameters are measured and used to assist in calculating the quantity of liquid in the container, said other parameters including two or more of:
· ambient temperature,
• a temperature within the container,
• a temperature outside the container,
• ambient pressure,
• a pressure within the container,
• a pressure outside the container,
• orientation of the container,
• acceleration of the container,
• ambient noise, and
• vibration outside the container.

12. A method according to any of claims 8 to 11, wherein the method includes calculating the quantity of liquid in the container and calculating an error margin with the use of multiple estimates of the volume of separate parts of the container each having its own error margin.

13. A method according to any of claims 8 to 12, wherein the method includes calculating the quantity of liquid in the container with the use of a computer model that relates an acoustic signature from the container, or part thereof, onto an estimate of a volume of liquid, optionally with the use of other parameters.

14. A vehicle including a fuel tank and a fuel gauge apparatus for providing an indication of the volume of fuel in the fuel tank, the vehicle and the fuel tank for example being an aircraft and a liquid hydrogen fuel tank respectively, wherein the fuel gauge apparatus includes apparatus according to any of claims 1 to 7 and/or wherein the fuel gauge apparatus operates with the use of a method according to any of claims 8 to 13.

15. A computer program product comprising instructions which, when the program is executed by a computer, cause the computer to perform the function of the processing unit of any of claims 1 to 7 and/or cause the computer to calculate an estimate of a quantity/volume of a liquid according to the method of any of claims 8 to 13, the computer program product optionally being provided on a computer processing unit, as part of its programming.
